# EUROPÄISCHE PATENTSCHRIFT

(11) **EP 1 128 053 B1**
(45) Veröffentlichungstag und Bekanntmachung des Hinweises auf die Patenterteilung: **27.07.2005**
(21) Anmeldenummer: 01104238.9
(22) Anmeldetag: 22.02.2001
(51) Int. Cl.: F02M 21/04, F02B 29/04, F02D 19/02

(54) **Gasmischvorrichtung für stationäre und instationäre Otto-Gasmotoren**
Mixing device for spark ignited gas engines
Dispositif de mélange pour moteur à gaz à allumage commandé

(30) Priorität: 25.02.2000 DE 10008959
(43) Veröffentlichungstag der Anmeldung: 29.08.2001
(73) Patentinhaber: DEUTZ Aktiengesellschaft, 51063 Köln (DE)
(72) Erfinder: Berger, Olaf, 67165 Waldsee (DE); Willms, Heinz, 69469 Weinheim (DE)

(56) Entgegenhaltungen:
- DE-A- 2 708 824
- DE-A- 2 722 226
- DE-A- 19 634 299
- US-A- 4 398 521
- US-A- 5 377 646
- US-A- 5 595 163
- US-A- 5 913 239
- PATENT ABSTRACTS OF JAPAN vol. 018, no. 237 (M-1600), 6. Mai 1994 (1994-05-06) -& JP 06 026405 A (NIPPON CARBURETER CO LTD), 1. Februar 1994 (1994-02-01)
- PATENT ABSTRACTS OF JAPAN vol. 2000, no. 02, 29. Februar 2000 (2000-02-29) -& JP 11 324812 A (HINO MOTORS LTD), 26. November 1999 (1999-11-26)
- PATENT ABSTRACTS OF JAPAN vol. 1999, no. 11, 30. September 1999 (1999-09-30) -& JP 11 159403 A (MITSUBISHI HEAVY IND LTD), 15. Juni 1999 (1999-06-15) -& DATABASE WPI Section PQ, Week 199937 Derwent Publications Ltd., London, GB; Class Q53, AN 1999-432786 XP002189755 & JP 11 159403 A (MITSUBISHI JUKOGYO KK), 15. Juni 1999 (1999-06-15)

## Beschreibung

Die Erfindung betrifft eine Brennkraftmaschine mit einem Kurbelgehäuse, in dem eine Kurbelwelle drehbar gelagert ist, an der zumindest ein einen Kolben tragendes Pleuel angelenkt ist, wobei der Kolben in einem von einem Zylinderkopf abgedeckten Zylinder unter Bildung eines Arbeitsraums bewegbar ist, dem ein Gas-Luft-Gemisch zuführbar ist, wobei das Gas und die Verbrennungsluft vor dem Arbeitsraum der Brennkraftmaschine über einen in einer Verbrennungsluftleitung eingesetzten Mischeinsatz zusammengeführt werden und der Mischeinsatz großflächig ausgebildet ist, und wobei die Brennkraftmaschine Abgasturboaufladung und Ladeluftkühlung aufweist.

Eine derartige Brennkraftmaschine ist aus der US 5,595,163 bekannt. Diese Brennkraftmaschine ist mit einem Gas-Luft-Gemisch betreibbar, wobei das Gas der Verbrennungsluft beispielsweise in einem Venturi-Mischer zugeführt wird. Dabei wird eine Baueinheit, bestehend aus dem Venturi-Mischer, einem Durchflussmesser und einem Drosselventil, angegeben, wobei durch die spezielle Ausbildung des Venturi-Mischers dem Gas eine Tangentialströmung aufgezwungen wird. Eine ähnliche Brennkraftmaschine ist aus der US 5,913,239 bekannt. Auch in diesem Dokument ist eine Baueinheit, bestehend aus einem Venturi-Mischer, einem Durchflussmesser und einem Drosselventil beschrieben.

Aus der DE-A 27 22 226 schließlich ist eine Brennkraftmaschine bekannt, bei der das brennbare Gas vor dem Turbolader der Brennluft zugemischt wird. Dadurch ist zuerst eine Entspannung des Brenngases erforderlich, wobei jedoch danach wieder Verdichterarbeit aufgebracht werden muss, um das Gas-Luft-Gemisch auf einen höheren, als den erforderlichen Ladedruck zu verdichten. Ein Teil dieser Verdichterarbeit wird als Wärme im Ladeluftkühler dem Gas-Luft-Gemisch wieder entzogen. Zudem hat sich herausgestellt, dass die Vermischung von Gas und Verbrennungsluft nicht homogen ist. Dies wirkt sich negativ auf die NOₓ-Emission aus.

Der Erfindung liegt die Aufgabe zugrunde, eine Brennkraftmaschine, die mit einem Gas-Luft-Gemisch betrieben wird, bereitzustellen, bei der die Gas-Verbrennungsluft-Mischvorrichtung einen gegenüber dem Stand der Technik verringerten Druckverlust aufweist und bei der ein möglichst homogenes Gemisch erzeugt wird. Weiterhin soll der Aufwand an Verdichterarbeit reduziert werden.

Diese Aufgabe wird dadurch gelöst, dass der Mischeinsatz in Strömungsrichtung hinter dem Abgasturbolader und vor dem Ladeluftkühler in die hier als Ladeluftleitung ausgebildete Verbrennungsluftleitung eingesetzt wird. In weiterer Ausgestaltung kann der Mischeinsatz alternativ auch direkt in den Ladeluftkühler integriert oder Bestandteil des Ladeluftkühlers sein. Zunächst einmal ergibt sich bei den Varianten der Vorteil, dass gegenüber Gasmischern, die vor dem Abgasturbolader angeordnet sind, nunmehr der Gasanteil des Gemisches nicht mehr durch die Verdichtung in dem Abgasturbolader aufgeheizt wird und somit dieser Anteil nicht nachträglich wieder gekühlt werden muss und der Strömungswiderstand "Mischer" vor dem Verdichter wegfällt. Allein durch diese Maßnahme ergibt sich ein Verbrauchsvorteil von bis zu ca. 2 % durch die eingesparte Kühl- und Verdichterleistung. Weiterhin kann der Mischeinsatz zwischen dem Abgasturbolader und dem Ladeluftkühler problemlos in die Verbrennungsluftleitung eingesetzt werden, da diese fast immer im Bereich Ladeluftkühler über einen großflächigen Querschnitt verfügt. Da der Mischer nicht mehr vor dem Verdichter angebaut ist, kann somit kann der notwendige Luftfilter direkt am Verdichtereintritt angeflanscht werden, wie dies auch bei selbstzündenden Brennkraftmaschinen üblich ist. Somit kann auf vorhandene Bauteile zurückgegriffen werden. Bei der Integration des Mischeinsatzes in den Ladeluftkühler ist weiterhin nur eine einmalige Anpassung des Ladeluftkühlers zur Aufnahme des Mischeinsatzes nötig. Dieser Ladeluftkühler kann problemlos auch für mit Dieselkraftstoff betriebene selbstzündende Brennkraftmaschinen (im alternativen Lieferprogramm des jeweiligen Herstellers) genutzt werden, indem der Einschub für den Mischeinsatz durch einen Deckel verschlossen wird bzw. bei dem Ladeluftkühler mit integriertem Mischer kann die Gaszufuhr einfach verschlossen sein. Andererseits ist in dem Ladeluftkühler die Verbrennungsluft in den Strömungsnetzen gleichmäßig verteilt und weist auch eine gleichmäßige Strömungsgeschwindigkeit auf, so dass in diesem Bereich zugeführtes Gas sehr gleichmäßig der Verbrennungsluft zugemischt wird. Entsprechend sind die Abgasemissionswerte niedrig. Dadurch, dass das Gas der Verbrennungsluft über einen großflächigen Mischeinsatz, der in eine Verbrennungsluftleitung einsetzbar ist, zugemischt wird, wird im Übrigen der Strömungsdruckverlust gegenüber bekannten Ausbildungen herabgesetzt und auch die Vermischung von Gas mit der Verbrennungsluft erfolgt homogener. Dies hat einen direkten Einfluss auf die Verbrauchs- und Abgasemissionswerte.

In Weiterbildung der Erfindung ist ein nach dem Venturi-Prinzip arbeitender Mischeinsatz mit festem Brenngaszumischquerschnitt im Ladeluftkühlergehäuse oder im Ein- oder Ausströmdeckel des Ladeluftkühlers eingebaut. Dabei bildet dann das äußere Gehäuse mit dem Mischeinsatz den erforderlichen Gasraum. Die Dosierung der Brenngasmenge erfolgt durch ein Regelglied. Durch den Einbau eines verschiebbaren oder geteilten und verschiebbaren Einsatzes kann durch die Erzeugung eines veränderbaren Mischquerschnittes eine genauere Dosierung der Brenngasmenge erreicht werden. Diese Ausführung hat den Vorteil, dass durch die Änderung der Zumischfläche die Anpassung an schwankende Gasheizwerte und Gasqualität in einem weiten Betriebsbereich möglich ist. Damit wird die Regelbarkeit verbessert. Das Venturi-Teil des Mischeinsatzes kann ganz oder teilweise mit in das Gehäuse eingegossen werden.

In Weiterbildung der Erfindung besteht der Mischeinsatz aus einer Anzahl von Rohren, die den Mischeinsatz bilden und wobei die Verbrennungsluft an den Rohren vorbeiströmt, während das Gas durch Öffnungen in den Rohren gleichmäßig verteilt zugemischt wird. Um den Strömungswiderstand luftseitig zu minimieren, können die Rohre strömungsgünstig ausgebildet sein. Bei einer anderen Ausbildungsform des Mischeinsatzes ist dieser gitterförmig oder netzförmig ausgebildet, wobei die Verbrennungsluft durch das Gitter oder die Netzmaschen hindurchführbar ist und das Gas durch Öffnungen in dem Gitter- bzw. in dem Netzgewebe austritt.

In Weiterbildung der Erfindung wird der Gasdruck vor dem Mischeinsatz in Abhängigkeit von dem Druck im Bereich des Ladeluftkühlers und/oder in Abhängigkeit der erforderlichen Betriebsparameter durch ein Stellglied geregelt. In diesem wird die entsprechend dem Betriebszustand der Brennkraftmaschine zuzumischende Gasmenge exakt eingestellt.

Weitere vorteilhafte Ausgestaltungen der Erfindung sind der Zeichnungsbeschreibung zu entnehmen, in der in den Figuren dargestellte Ausführungsbeispiele beschrieben sind.

Es zeigen:
- Fig. 1:: eine schematische Gesamtansicht mit einem in Strömungsrichtung vor dem Ladeluftkühler angeordneten Mischeinsatz und
- Fig. 2:: eine Detailansicht eines Ladeluftkühlers mit integriertem Mischeinsatz.
- Fig. 3:: eine schematische Gesamtansicht mit einem in Strömungsrichtung vor dem Ladeluftkühler angeordneten nach dem Venturi-Prinzip arbeitenden Mischeinsatz.

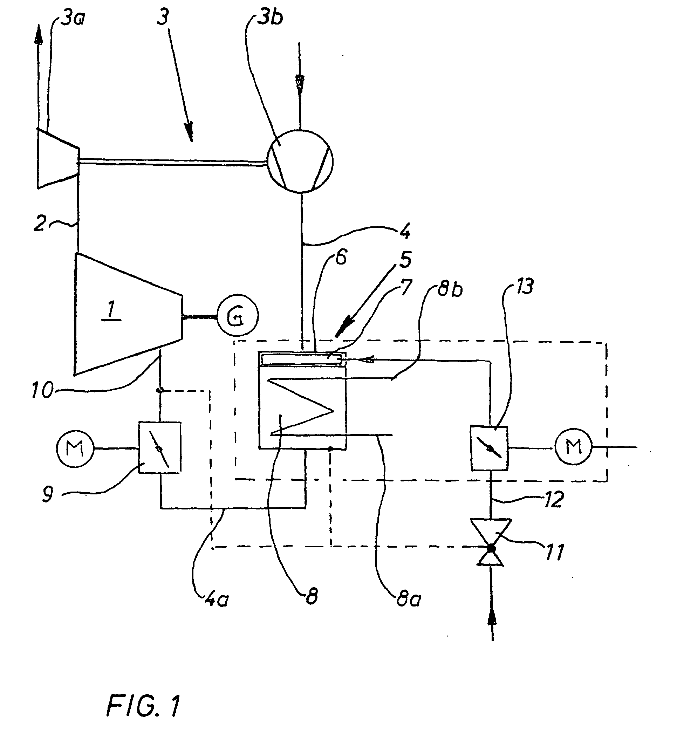

Die in Fig. 1 schematisch dargestellte Brennkraftmaschine 1 ist (ausgehend von einer selbstzündenden Brennkraftmaschine) als Otto-Gasmotor ausgebildet und weist in üblicher Bauart ein Kurbelgehäuse mit einer Kurbelwelle auf, an der eine Anzahl von Pleuel angelenkt sind, die in von Zylinderköpfen abgedeckten Zylindern unter Bildung von Arbeitsräumen bewegbar sind. Diesen Arbeitsräumen wird ein Gas-Luft-Gemisch zugeführt, das von Zündkerzen gezündet wird und anschließend wird das verbrannte Gemisch (Abgas) über Abgasleitungen 2 der Turbine 3a eines Abgasturboladers 3 zugeführt, von wo aus das Abgas nach Durchströmen der Turbine 3a in die Umgebung oder weiteren Reinigungseinrichtungen zugeführt wird. Von der Turbine 3a wird ein Verdichter 3b angetrieben, der Verbrennungsluft über eine nicht dargestellte Filtereinrichtung aus der Umgebung ansaugt und über eine als Ladeluftleitung ausgebildete Verbrennungsluftleitung 4 einer Ladeluftkühlereinrichtung 5 zuführt. Diese Ladeluftkühlereinrichtung 5 weist eingangsseitig einen Einschubteil 6 auf, in den der großflächige Mischeinsatz 7 einsetzbar oder integriert ist. Anschließend folgt der eigentliche Ladeluftkühler 8, der zur Kühlung des

Gas-Luft-Gemisches beispielsweise mit dem Kühlkreislauf der Brennkraftmaschine 1 über einen Zufluss 8a und einen Abfluss 8b (Gegenstromprinzip) verschaltet ist. Weiter gelangt das nunmehr abgekühlte Gas-Luft-Gemisch über eine Drosseleinrichtung 9 zur Leistungssteuerung der Brennkraftmaschine in die Gemischzuführungsleitungen 10 der Brennkraftmaschine 1. Entsprechend dem Gemischdruck im Ladeluftkühler 8 wird ein Paralleldruckregler 11 angesteuert, der den Druck des Gases auf einen Druck p regelt, der um ein bestimmtes Maß höher ist als der Verbrennungsluftdruck in der Ladeluftkühlereinrichtung 5. Die entsprechenden funktionalen Zusammenhänge zwischen dem im Ladeluftkühler 8 gemessenen Druck und dem entsprechend in der Ladeluftkühlereinrichtung 5 herrschenden Druck können in Steuerkennfeldern abgelegt sein. Zusätzlich oder alternativ kann der Druck auch im weiteren Verlauf der Verbrennungsluftleitung 4a (Gas-Luft-Gemischleitung) erfasst werden. In die Gaszuführleitung 12 zu dem Mischeinsatz 7 ist ein Regelglied 13 eingesetzt, das entsprechend dem erforderlichen Luftverhältnis λ der Brennkraftmaschine 1 die zuzuführende Gasmenge regelt. Bezüglich des Gases ist festzuhalten, dass dieses ein beliebiges Gas sein kann, mit dem die Brennkraftmaschine 1 betrieben werden kann, also beispielsweise auch Kraftgas aus einem stationären oder mobilen Versorgungsnetz oder Klär- bzw. Deponiegas, das ggf. zusätzlich mit höherwertigem Gas gemischt werden kann.

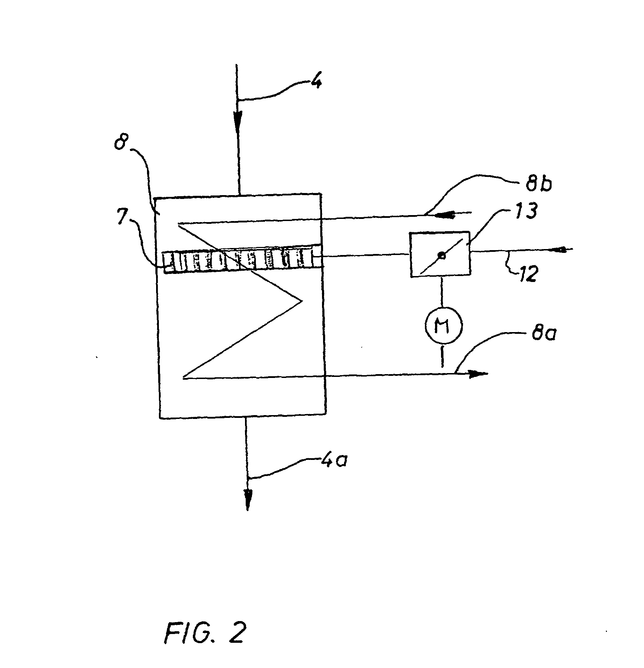

In dem Ausführungsbeispiel nach Fig. 2 ist der Mischeinsatz 7 direkt in den eigentlichen Ladeluftkühler 8 integriert. Dabei kann auch der Mischeinsatz 7 beispielsweise für Reparatur oder Wartung aus dem Ladeluftkühler 8 herausnehmbar sein. Somit kann dieser Ladeluftkühler 8 auch beispielsweise bei einer selbstzündenden Version der entsprechenden Brennkraftmaschinenbaureihe ohne weitere Veränderungen verwendet werden.

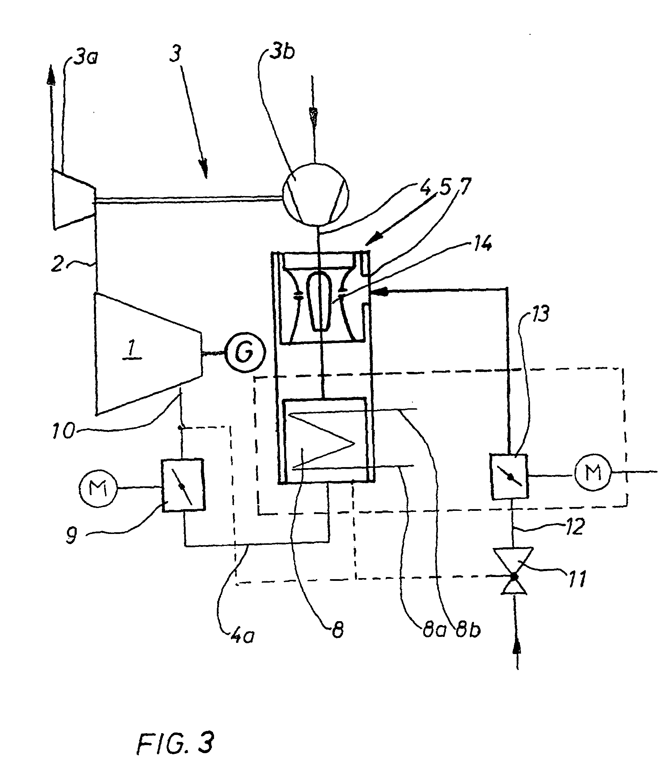

Das Ausführungsbeispiel nach Figur 3 entspricht weitgehend der Gesamtansicht gemäß Figur 1, wobei hier im Unterschied der Mischeinsatz 7 als Venturi-Mischer 14 ausgebildet ist. Dieser Venturi-Mischer 14 kann wahlweise als Festspaltmischer mit einem externen Regelglied 13 - wie abgebildet - ausgebildet sein oder aber als Vario-Mischer mit modifizierbarem Mischspalt.

## Patentansprüche

1. Brennkraftmaschine mit einem Kurbelgehäuse, in dem eine Kurbelwelle drehbar gelagert ist, an der zumindest ein einen Kolben tragendes Pleuel angelenkt ist, wobei der Kolben in einem von einem Zylinderkopf abgedeckten Zylinder unter Bildung eines Arbeitsraums bewegbar ist, dem ein Gas-Luft-Gemisch zuführbar ist, wobei das Gas und die Verbrennungsluft vor dem Arbeitsraum der Brennkraftmaschine über einen in einer Verbrennungsluftleitung (4) eingesetzten Mischeinsatz (7) zusammengeführt werden und der Mischeinsatz (7) großflächig ausgebildet ist, und wobei die Brennkraftmaschine Abgasturboaufladung und Ladeluftkühlung aufweist,
**dadurch gekennzeichnet, dass** der Mischeinsatz (7) in Strömungsrichtung hinter dem Abgasturbolader (3) und vor dem Ladeluftkühler (8) angeordnet ist.

2. Brennkraftmaschine nach Anspruch 1,
**dadurch gekennzeichnet, dass** der Mischeinsatz (7) eingangsseitig in den Ladeluftkühler (8) integriert ist.

3. Brennkraftmaschine nach Anspruch 2,
**dadurch gekennzeichnet, dass** der Mischeinsatz (7) Bestandteil des Ladeluftkühlers (8) ist.

4. Brennkraftmaschine nach einem der vorherigen Ansprüche,
**dadurch gekennzeichnet, dass** der Mischeinsatz (7) ein Venturi-Mischer (14) ist.

5. Brennkraftmaschine nach einem der vorherigen Ansprüche,
**dadurch gekennzeichnet, dass** der Mischeinsatz (7) rohrförmig ausgebildet ist, wobei die Verbrennungsluft zwischen den Rohren hindurchführbar ist und das Gas durch Öffnungen in den Rohren austritt.

6. Brennkraftmaschine nach einem der vorherigen Ansprüche,
**dadurch gekennzeichnet, dass** der Mischeinsatz (7) gitterförmig ausgebildet ist, wobei die Verbrennungsluft zwischen den Gitterrohren hindurchführbar ist und das Gas durch Öffnungen in den Gitterrohren austritt.

7. Brennkraftmaschine nach einem der vorherigen Ansprüche,
**dadurch gekennzeichnet, dass** der Mischeinsatz (7) netzförmig ausgebildet ist, wobei die Verbrennungsluft durch die Netzmaschen hindurchführbar ist und das Gas durch Öffnungen in dem Netzgewebe austritt.

8. Brennkraftmaschine nach einem der vorherigen Ansprüche,
**dadurch gekennzeichnet, dass** der Gasdruck vor dem Mischeinsatz (7) in Abhängigkeit von dem Druck im Bereich des Ladeluftkühlers (8) und/oder in Abhängigkeit der erforderlichen Betriebsparameter durch ein Stellglied (13) geregelt wird.

## Claims

1. Internal combustion engine having a crankcase in which a crankshaft is mounted rotatably, on which crankshaft at least one connecting rod which bears a piston is articulated, it being possible for the piston to be moved in a cylinder which is covered by a cylinder head, so as to form a working chamber to which it is possible to feed a gas/air mixture, the gas and the combustion air being guided together ahead of the working chamber of the internal combustion engine via a mixing insert (7) which is introduced into a combustion-air line (4), and the mixing insert (7) being of large-area configuration, and the internal combustion engine having exhaust-gas turbocharging and charge-air cooling, **characterized in that** the mixing insert (7) is arranged behind the exhaust-gas turbocharger (3) and ahead of the charge-air cooler (8), as seen in the direction of flow.

2. Internal combustion engine according to Claim 1, **characterized in that** the mixing insert (7) is integrated into the charge-air cooler (8) on the input side.

3. Internal combustion engine according to Claim 2, **characterized in that** the mixing insert (7) is a constituent part of the charge-air cooler (8).

4. Internal combustion engine according to one of the preceding claims, **characterized in that** the mixing insert (7) is a venture mixer (14).

5. Internal combustion engine according to one of the preceding claims, **characterized in that** the mixing insert (7) is of tubular configuration, it being possible to guide the combustion air through between the tubes, and the gas emerging through openings in the tubes.

6. Internal combustion engine according to one of the preceding claims, **characterized in that** the mixing insert (7) is of lattice-shaped configuration, it being possible to guide the combustion air through between the lattice tubes, and the gas emerging through openings in the lattice tubes.

7. Internal combustion engine according to one of the preceding claims, **characterized in that** the mixing insert (7) is of net-shaped configuration, it being possible to guide the combustion air through the net meshes, and the gas emerging through openings in the mesh fabric.

8. Internal combustion engine according to one of the preceding claims, **characterized in that** the gas pressure ahead of the mixing insert (7) is regulated by an actuator (13) as a function of the pressure in the region of the charge-air cooler (8) and/or as a function of the required operating parameters.

## Revendications

1. Moteur à combustion interne comprenant un carter moteur, dans lequel un vilebrequin est monté à rotation, sur lequel est articulée au moins une bielle portant un piston, le piston pouvant être déplacé dans un cylindre recouvert par une culasse en formant une chambre de travail, à laquelle on peut acheminer un mélange de gaz et d'air, le gaz et l'air comburant étant combinés avant la chambre de travail du moteur à combustion interne par un mélangeur (7) inséré dans une conduite d'air comburant (4) et le mélangeur (7) étant réalisé avec une grande surface, et le moteur à combustion interne présentant une suralimentation par turbocompresseur et un refroidissement d'air de suralimentation,
**caractérisé en ce que** le mélangeur (7) est disposé dans la direction de l'écoulement derrière le turbocompresseur (3) et avant le refroidisseur d'air de suralimentation (8).

2. Moteur à combustion interne selon la revendication 1, **caractérisé en ce que** le mélangeur (7) est intégré du côté de l'entrée dans le refroidisseur d'air de suralimentation (8).

3. Moteur à combustion interne selon la revendication 2,
**caractérisé en ce que** le mélangeur (7) fait partie du refroidisseur d'air de suralimentation (8).

4. Moteur à combustion interne selon l'une quelconque des revendications précédentes,
**caractérisé en ce que** le mélangeur (7) est un mélangeur à venturi (14).

5. Moteur à combustion interne selon l'une quelconque des revendications précédentes, **caractérisé en ce que** le mélangeur (7) est réalisé sous forme de tube, l'air comburant pouvant être introduit entre les tubes et le gaz sortant par des ouvertures dans les tubes.

6. Moteur à combustion interne selon l'une quelconque des revendications précédentes,
**caractérisé en ce que** le mélangeur (7) est réalisé en forme de grille, l'air comburant pouvant être introduit entre les tubes de la grille et le gaz sortant par des ouvertures dans les tubes de la grille.

7. Moteur à combustion interne selon l'une quelconque des revendications précédentes,
**caractérisé en ce que** le mélangeur (7) est réalisé en forme de filet, l'air comburant pouvant être introduit à travers les mailles du filet et le gaz sortant par des ouvertures dans le filet à mailles.

8. Moteur à combustion interne selon l'une quelconque des revendications précédentes,
**caractérisé en ce que** la pression de gaz avant le mélangeur (7) est régulée en fonction de la pression dans la région du refroidisseur d'air de suralimentation (8) et/ou en fonction des paramètres de fonctionnement nécessaires, par un organe de réglage (13).
